# EUROPEAN PATENT APPLICATION

(11) **EP 2 377 676 A2**
(43) Date of publication of application: **19.10.2011**
(21) Application number: 11160756.0
(22) Date of filing: 31.03.2011
(51) Int. Cl.: B29D 35/06, A43B 23/08

(54) **Footwear manufacturing process**

(30) Priority: 15.04.2010 ES 201030545
(71) Applicant: Leon Martinez-Losa, Maria, 26580 La Rioja (ES)
(72) Inventor: Leon Martinez-Losa, Maria, 26580 La Rioja (ES)
(74) Representative: Isern-Jara, Nuria

(57) **Abstract**

A footwear manufacturing process, in which the footwear is provided with a main body, a lower sole and a toecap at the front made from a rubber material or the like, in which the main body of the shoe is placed in a housing made on a support that is associated to a mould, in such a way that a first piston-cylinder movable in regard to the mould carries out the operation of shaping by pressure and vulcanising the lower sole and a second piston-cylinder movable in regard to the mould carries out the operation of shaping by pressure and vulcanising the toecap, in such a way that once the shoe is removed from the mould it has the lower sole and the front toecap already incorporated. In this way by using a single mould and machine the placement of the sole and the toecap is carried out on shoe.

## Description

### OBJECT OF THE INVENTION

The present invention refers to a footwear manufacturing process that incorporates appreciable innovations and advantages.

More specifically, the invention proposes the development of a new process for the manufacture of footwear provided with toecaps that is more efficient.

### BACKGROUND TO THE INVENTION

For many years the manufacture of footwear has been well known, and more specifically, shoes that are made up of a main body, for example, of a woven material with a rubber or composite sole and a toecap at the front of said shoe that acts as a reinforcing element.

In order to obtain the above described shoe, currently it is carried out in such a way that, in the first place the main body of the shoe is placed into a mould where the rubber sole is applied and after that in a second machine provided with a mould, the fitting of the toe cap, which has previously been vulcanised, is carried out.

The above mentioned process has the disadvantage that it requires at least two machines provided with moulds, one being for the fitting of the sole and the other for the fitting of the toecap, in such a way that it requires a greater consumption of energy, space for the machines and the operation of passing the footwear from one machine to the other, involving increased manufacturing time, and as a result, greater financial cost.

### DESCRIPTION OF THE INVENTION

This invention has been developed for the purpose of providing a process aimed at solving the previously stated disadvantages in a satisfactory manner, contributing in addition other advantages that will be evident from the description that is attached below.

It is, therefore, an object of the present invention to provide a footwear manufacturing process, in which the shoe is provided with a main body with a sole underneath and a toecap at the front made from a rubber material or the like that is free of seams, and is characterised in that the main body of the shoe is placed in a housing made on a support associated to a mould, in such a way that a first cylinder-piston movable in regard to the mould carries out the operation of shaping by pressure and vulcanising the sole and a second cylinder-piston movable in regard to the mould carries out the operation of shaping by pressure and vulcanising the toecap, in such a way that once the shoe is removed from the mould it has the sole underneath and the toecap already incorporated.

Thanks to these characteristics, the number of machines and moulds that are necessary to make the shoe with a toecap, as previously defined is reduced, as it is carried out in a simultaneous manner with the sole and the toecap using a single mould, with the consequent saving of time and reduced manufacturing costs.

According to another aspect of the invention process, heat is applied when the first and second cylinder-piston operate.

By preference, the body of the shoe is placed on the mould in an inverted manner to the use thereof, in such a way that the cylinder-piston associated to the toecap is located on a plane under the mould whilst the cylinder piston associated to the under sole is located on an upper plane.

Other characteristics and advantages of the process object of this present invention will become clear from a description of a preferred embodiment, but it is not exclusive, the drawings that are attached are by way of illustration but without being in any way limiting.

### A BRIEF DESCRIPTION OF THE DRAWINGS

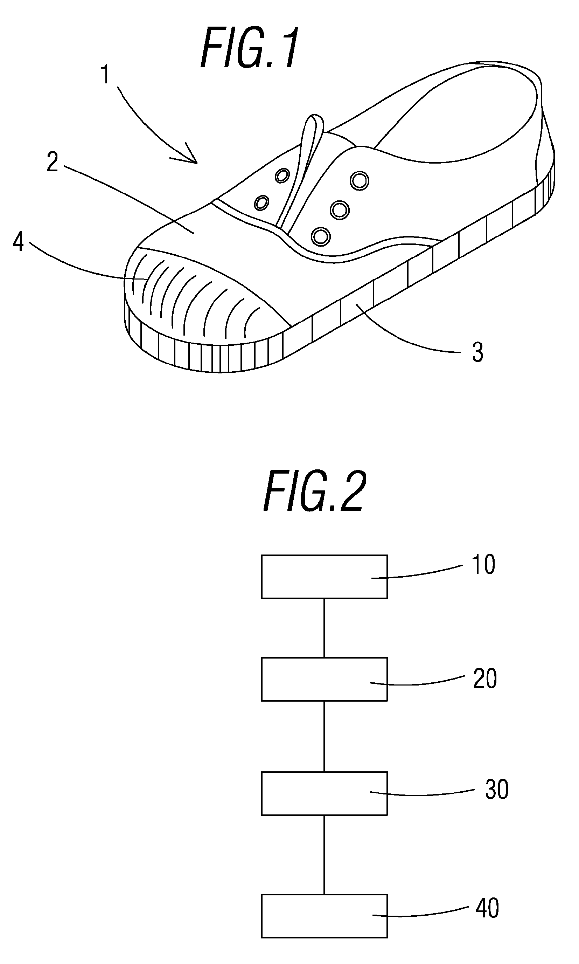

Figure 1. - This is a perspective view of a shoe obtained from the manufacturing process according to the invention; and
Figure 2. - This is a block diagram of the process of the invention.

### A DESCRIPTION OF A PREFERRED EMBODIMENT

According to one example of a practical embodiment of the invention, the manufacture of a shoe has been carried out, shown in a general manner with the reference number 1, the main body 2 of which is made from a woven material, in addition having a lower sole 3 and a front toecap 4 made from a rubber, composite or similar material.

For the process of the embodiment of this footwear, in a first operational stage (10) the main body 2 and the lower sole 3 of the shoe 1 are manually placed in a support that has a housing and is subsequently inserted in a guided manner into a mould made from two metal halves that close together.

In a second stage (20) a first cylinder-piston is activated by means of a button or in a completely automatic manner that is moved axially and perpendicularly to the mould that carries out the shaping operation (by means of applying pressure) and vulcanising the sole and, after this in a subsequent stage (30) a second piston-cylinder that is movable to the mould carries out the shaping operation by pressure and vulcanising the toecap. In a final stage (40) the mould is opened and the shoe is manually removed and a shoe is obtained that incorporates a lower sole 3 and the front toecap 4, although it will be clear for any expert in the subject that varying means of automatic extraction can be used that make the manufacturing process easier.

Prior to the working of the above two cylinder-piston, the shoe body 2 is located on the mould in an inverted manner to the use thereof, in such a way that the cylinder-piston associated to the toecap is on a plane under the mould, whilst the cylinder-piston associated to the lower sole is located on an upper plane.

It must be mentioned that the application of heat is carried out by the means already known in the technique and at a temperature that is sufficiently controlled to vulcanise and permanently fuse the rubber material of the lower sole and the front toecap onto the woven material that makes up the main body of the shoe to be obtained.

The details, shapes, sizes and other accessorial elements, likewise the materials used in the manufacture process of the invention can be appropriately substituted by others that are technically equivalent and do not stray away from the essentiality of the invention or the scope defined by the claims that are included below.

## Claims

1. A footwear manufacturing process, in which the footwear (1) is provided with a main body (2), a lower sole (3) and a toecap at the front made from a rubber material or the like, **characterised in that** the main body of the shoe is placed in a housing made from a support associated to a mould, in such a way that a first cylinder-piston movable in regard to the mould carries out the operation of shaping by pressure and vulcanising the lower sole (3) and a second cylinder-piston movable in regard to the mould carries out the operation of shaping by pressure and vulcanising the toecap (4), in such a way that once the shoe (1) is removed from the mould it has the lower sole (3) and the front toecap (4) already incorporated.

2. A process according to claim 1, **characterised in that** the main body (2) of the shoe is placed on the mould in an inverted manner to the use thereof, in such a way that the cylinder-piston associated to the toecap is located on a plane under the mould whilst the cylinder piston associated to the lower sole is located on a upper plane.
